# EUROPEAN PATENT APPLICATION

(11) **EP 4 350 220 A1**
(43) Date of publication of application: **10.04.2024**
(21) Application number: 22811677.8
(22) Date of filing: 27.05.2022
(51) Int. Cl.: F24C 15/08, F24C 15/00, F24C 15/10, F24C 7/08, H05B 6/12, H05K 7/20

(54) **ELECTRIC RANGE**

(30) Priority: 28.05.2021 KR 20210069178; 13.08.2021 KR 20210107279
(71) Applicant: LG Electronics Inc., Yeongdeungpo-gu Seoul 07336 (KR)
(72) Inventor: KIM, Seunghak, Seoul 08592 (KR); CHO, Junghyeon, Seoul 08592 (KR)
(74) Representative: Vossius & Partner Patentanwälte Rechtsanwälte mbB
(86) International application number: PCT/KR2022/007536
(87) International publication number: WO 2022/250486

(57) **Abstract**

An electric range according to an embodiment of the present disclosure comprises: a case which forms the appearance of the electric range; a heating unit which heats an object to be heated; an upper bracket which is disposed under the heating unit and supports the heating unit; an operation unit through which operation commands for controlling the heating unit are input; a printed circuit board on which at least one electronic component for driving the heating unit is mounted; and a supporter which is disposed under the upper bracket, wherein the supporter comprises a first support part which supports the printed circuit board and a second support part which supports the operation unit.

## Description

### [Technical field]

The present disclosure relates to an electric range that heats food using electricity.

### [Background Art]

The statements in this section merely provide background information related to the present disclosure and do not necessarily constitute prior art.

In homes or restaurants, various types of cooking utensils for heating food are used. The cooking utensils include a gas stove using gas and an electric range using electricity.

An electric range is roughly divided into a resistance heating type electric range and an induction heating type electric range.

The resistance heating type electric range generates heat by applying a current to a metal resistance line or a nonmetal heating element such as silicon carbide, and heats an object to be heated (e.g. a cooking vessel such as a pot or frying pan) by radiating or conducting the generated heat.

The induction heating type electric range generates a magnetic field around a coil by applying high frequency power to the coil, and heats an object to be heated made of a metallic material, by using an eddy current generated from the generated magnetic field.

The basic principle of induction heating is as follows. When high-frequency current is applied to a working coil or a heating coil, a magnetic field is generated around the coil. As the object to be heated is heated by electromagnetic induction caused by the generated magnetic field, heat is generated from the object to be heated, thereby heating food inside of the object to be heated.

An electric range is manufactured by assembling many components, such as a printed circuit board on which electronic components are mounted, an input unit for the user to operate the electric range, a display unit to inform the user of the operating status of the electric range, and a heating element or coil. Accordingly, various efforts are being attempted to speed up the production of electric ranges.

In addition, an electric range includes an inner space in which various electronic components are disposed. However, the inner space can become hot due to various factors. For example, the temperature of the inner space may rise due to heat from an object to be heated (for example, a container in which food is placed), or heat generated from electronic components (for example, a power device or a switching device that generates high-frequency power) disposed in the inner space. If the temperature of the inner space rises excessively, the electric range can fail to operate normally. Accordingly, the electric range generally includes an air flow path and an air blower fan through which air can flow to cool the inner space.

As the flow of air through the air flow path becomes smoother, cooling efficiency can be improved, which ultimately leads to improved performance of the electric range. Therefore, various efforts are being attempted to make the air flow more smoothly.

In addition, if the amount of air drawn into the air blower fan is not sufficient, this causes reduction in cooling efficiency. Therefore, there is a need for structure that allows a sufficient amount of air to be drawn into the air blower fan.

In addition, the electric range includes a heater including a working coil receiving high-frequency current or heated to high temperatures and electronic components supplying electric current to the heater. However, a magnetic field or heat generated by the heater has adverse effects on the electronic components. Accordingly, a bracket is disposed over the electronic components to block the magnetic field or heat while supporting the heater. However, such a bracket can undergo deflection over time due to a weight of the heater, and thus, requires structure to support the bracket.

### [Disclosure]

### [Technical Problem]

According to an embodiment of the present disclosure, an electric range is provided that can further simplify the assembly process.

According to an embodiment of the present disclosure, an electric range is provided that can reduce the number of components to be assembled.

According to an embodiment of the present disclosure, an electric range is provided that can improve the cooling efficiency of the inner space of the electric range.

According to an embodiment of the present disclosure, an electric range is provided that can increase the area of an outlet through which air is discharged from the inner space of the electric range.

According to an embodiment of the present disclosure, an electric range is provided that can improve cooling efficiency by an air blower fan.

According to an embodiment of the present disclosure, an electric range is provided that has a structure in which an air blower fan that discharges air into the inner space of the electric range can intake a sufficient amount of air.

According to an embodiment of the present disclosure, an electric range is provided that has a structure that can limit or prevent air inside the electric range, in addition to external air, from flowing into an air blower fan.

According to an embodiment of the present disclosure, an electric range is provided that has a structure in which air discharged from an air blower fan can more efficiently cool components on a printed circuit board.

According to an embodiment of the present disclosure, an electric range is provided that has a structure in which air discharged from an air blower fan is not discharged to the lower surface of a printed circuit board, but only to the upper surface of the printed circuit board.

According to an embodiment of the present disclosure, an electric range is provided that includes a case that can filter out foreign substances in the air flowing into an air blower fan and at the same time have appropriate rigidity.

According to an embodiment of the present disclosure, an electric range is provided that has a structure capable of preventing a decrease in cooling efficiency due to deformation of internal components.

According to an embodiment of the present disclosure, an electric range is provided that has a structure that can limit or prevent air inside the electric range from flowing into an air blower fan even if internal components are deformed.

According to an embodiment of the present disclosure, an electric range is provided that can efficiently prevent sagging of an upper bracket supporting a heating unit.

According to an embodiment of the present disclosure, an electric range is provided that can prevent sagging of an upper bracket supporting a heating unit while reducing the number of man-hours for manufacturing the electric range.

According to an embodiment of the present disclosure, an electric range is provided that can be manufactured less expensively and can prevent sagging of an upper bracket supporting a heating unit.

Objectives of the present disclosure are not limited to what has been described. Additionally, other objectives and advantages that have not been mentioned may be clearly understood from the following description and may be more clearly understood from embodiments. Further, it will be understood that the objectives and advantages of the present disclosure may be realized via means and a combination thereof that are described in the appended claims.

### [Technical Solution]

An electric range according to an embodiment of the present disclosure may include a case, a supporter which is mounted on the case and includes a first region supporting a printed circuit board and a second region supporting an input unit for receiving a control input by a user.

In this case, the lower surface of the second region and the case may be spaced apart from each other to form an air flow path through which air is discharged from the inside of the case.

In addition, a through hole corresponding to the outlet of the air guide mounted on the first region may be formed between the first region and the second region.

An electric range according to an embodiment of the present disclosure may include a case, a supporter which is mounted on the case and includes a first region where an air blower fan is disposed and a second region where a printed circuit board is disposed, wherein the lower surface of the first region and the case may be spaced apart from each other.

An electric range according to an embodiment of the present disclosure may include a case, a supporter which is mounted on the case and includes a second region where an air blower fan is disposed and a second region where a printed circuit board is disposed, wherein an average distance between the first region and the case may be greater than an average distance between the second region and the case.

In an electric range according to an embodiment of the present disclosure, a supporter on which a printed circuit board is mounted may also perform the function of supporting the upper bracket.

An electric range according to an embodiment of the present disclosure may include a support in which a mounting portion on which a printed circuit board and the like is mounted and a boss portion supporting an upper bracket are integrally formed.

An electric range according to an embodiment of the present disclosure may include a case which forms an appearance, a heating unit which heats an object to be heated, an upper bracket which is disposed on a lower portion of the heating unit and supports the heating unit, an operation unit through which operation command for controlling the heating unit is input, a printed circuit board on which at least one electronic component for driving the heating unit is mounted, and a supporter which is disposed on a lower portion of the upper bracket, wherein the supporter may include a first support which supports the printed circuit board and a second support which supports the operation unit.

An electric range according to an embodiment of the present disclosure may further include an upper bracket which is disposed on an upper portion of the case and on which the object to be heated is disposed on an upper surface thereof. In this case, the heating unit may be disposed on a lower portion of the upper plate.

In an electric range according to an embodiment of the present disclosure, a lower surface of the second support may be spaced apart from an upper surface of the case.

An electric range according to an embodiment of the present disclosure may further include an air blower fan which is mounted on the first support, intakes air into an air blower intake portion and discharges the air through an air blower discharge portion; and an air guide which is mounted on the first support and includes a guide intake portion connected to the air blower discharge portion and a guide discharge portion. In this case, the supporter may further include an intake hole formed at a location corresponding to a location of the air blower intake portion and a discharge hole formed between the first support and the second support and connected to the guide discharge portion.

In an electric range according to an embodiment of the present disclosure, the case may further include a case intake portion formed at a location corresponding to a location of the intake hole and a case discharge portion formed at a location corresponding to a location of the second support.

In an electric range according to an embodiment of the present disclosure, the case may include a first casing which forms a bottom surface of the case, a second casing which is formed to be bent from the first casing, and forms a front surface, side surface and rear surface of the case, and a third casing which is formed to be bent from the second casing and supports the upper bracket, wherein the case intake portion and the case discharge portion may be formed in the first casing.

In an electric range according to an embodiment of the present disclosure, each of the case intake portion and the case discharge portion may have a porous structure having multiple holes.

In an electric range according to an embodiment of the present disclosure, the second support may include a bottom plate which is connected to the first support in front of the first support and is spaced apart from an upper surface of the case, and at least one boss which is disposed on the bottom plate and is coupled to the operation unit.

An electric range according to an embodiment of the present disclosure may include a case which forms an appearance, a heating unit which heats an object to be heated, an operation unit through which operation command for controlling the heating unit is input, a printed circuit board on which at least one electronic component for driving the heating unit is mounted, and an air blower fan which intakes air into an air blower intake portion and discharges the air through an air blower discharge portion, wherein the case includes a case intake portion formed at a location corresponding to a location of the air blower intake portion and a case discharge portion formed on a lower portion of the operation unit, and air discharged to the air blower discharge portion is discharged through the case discharge portion.

An electric range according to an embodiment of the present disclosure may further include an upper plate which is disposed on a lower portion of the heating unit and supports the heating unit.

An electric range according to an embodiment of the present disclosure may further include a supporter disposed on a lower portion of the heating unit.

An electric range according to an embodiment of the present disclosure may further comprise an air guide which is mounted on the support and includes a guide intake portion connected to the air blower discharge portion and a guide discharge portion, wherein the supporter may further include an intake hole formed at a location corresponding to a location of the air blower intake portion and a discharge hole connected to the guide discharge portion.

In an electric range according to an embodiment of the present disclosure, the supporter may include a first support on which the printed circuit board is mounted and a second support which is connected to a front of the first support and is disposed between the operation unit and the case discharge portion.

An electric range according to an embodiment of the present disclosure may include a case and a supporter which is mounted on the case and includes a second region where an air blower fan is disposed and a second region where a printed circuit board is disposed. In this case, the supporter may have an inlet through which external air is sucked in the second region. In addition, the supporter may include a rib formed to surround the inlet.

An electric range according to an embodiment of the present disclosure may include a case and a supporter which is mounted on the case and including a second region where an air blower fan is disposed and a second region where a printed circuit board is disposed. In this case, the lower surface of the discharge port of the air blower fan may form the same plane as the lower surface of the printed circuit board, or may be located higher than the lower surface of the printed circuit board.

An electric range according to an embodiment of the present disclosure may include a case and a supporter which is mounted on the case and includes a second region where an air blower fan is disposed and a second region where a printed circuit board is disposed. In this case, the lower surface of the discharge port of the air blower fan may form substantially the same plane as the upper surface of the printed circuit board.

An electric range according to an embodiment of the present disclosure may include a case and a supporter which is mounted on the case and includes a second region where an air blower fan is disposed and a second region where a printed circuit board is disposed. The case may include an intake portion formed in a region corresponding to the second region of the supporter.

According to one embodiment of the present disclosure, a plurality of holes through which air can pass may be formed in the intake portion of the case.

In addition, according to one embodiment of the present disclosure, the area of the intake portion of the case may be larger than the area of the inlet of the air blower fan.

In addition, according to one embodiment of the present disclosure, a bent portion may be formed in the intake portion of the case. An inner surface surrounded by the bent portion of the intake portion of the case and an outer surface of the bent portion of the intake portion may form different planes.

An electric range according to an embodiment of the present disclosure may include a case and a supporter which is mounted on the case and includes a second region where an air blower fan is disposed and a second region where a printed circuit board is disposed. In this case, the air blower fan may be fixed to the supporter by a coupling member that penetrates the air blower fan and the supporter and is fastened to the case.

An electric range according to an embodiment of the present disclosure may include a case which forms an appearance, a heating unit which heats an object to be heated, an upper bracket which is disposed on a lower portion of the heating unit and supports the heating unit, and a support which is disposed on a lower portion of the upper bracket and includes a first region where an air blower fan is mounted and a second region where a printed circuit board is mounted, wherein a lower surface of the first region may be spaced upward from the case.

An electric range according to an embodiment of the present disclosure may further includes an upper plate which is disposed on the upper portion of the case and on which an object to be heated is disposed on an upper surface thereof. In this case, the heating unit may be disposed on a lower portion of the upper plate.

In an electric range according to an embodiment of the present disclosure, the air blower fan may include an inlet which is disposed at the bottom and intakes air, the supporter may further include an intake hole formed at a location corresponding to the location of the inlet in the first region, and the case is formed at a location corresponding to the intake hole may include an intake portion which provides a passage through which air is drawn into the air blower fan. The intake portion and the intake hole may be spaced apart in a vertical direction.

The area of the intake portion of an electric range according to an embodiment of the present disclosure may be larger than the area of the intake hole of the air blower fan.

The supporter of an electric range according to an embodiment of the present disclosure may extend downward from the first region and may further include a rib formed to surround the intake hole.

The intake portion of an electric range according to an embodiment of the present disclosure may have a porous structure with a plurality of holes formed therein, and may further include a bent portion bent in a vertical direction therein.

The upper surface of the first region of an electric range according to an embodiment of the present disclosure may be located higher than the upper surface of the second region.

The air blower fan of an electric range according to an embodiment of the present disclosure may further include a discharge port through which air is discharged, and the lower surface of the discharge port may be located higher than the lower surface of the printed circuit board.

The air blower fan of an electric range according to an embodiment of the present disclosure may include a securing portion through which a bolt passes, the supporter may include a fan securing hole through which the bolt penetrates, and the bolt can be fastened to the case by penetrating the securing portion and the fan securing hole.

An electric range according to an embodiment of the present disclosure may include a case which forms an appearance, a heating unit which heats an object to be heated, an upper bracket which is disposed on a lower portion of the heating unit, and supports the heating unit, and a support which is disposed on a lower portion of the upper bracket and includes a first region where an air blower fan is mounted and a second region where a printed circuit board is mounted. An average distance in the vertical direction between the lower surface of the first region and the case may be larger than an average distance in the vertical direction between the lower surface of the second region and the case.

An electric range according to an embodiment of the present disclosure may include a case which forms an appearance, a heating unit which heats an object to be heated, an upper bracket which is disposed on a lower portion of the heating unit, and supports the heating unit, and a support which is disposed on a lower portion of the upper bracket and includes a mounting portion on which a printed circuit board is mounted, wherein the support may further include a boss portion supporting the upper bracket.

The case of an electric range according to an embodiment of the present disclosure may include a first casing which forms the bottom surface of the case, a second-1 casing which is bent in the vertical direction at the right edge of the first casing and forms the right side of the case, a second-2 casing which is bent in the vertical direction at the front edge of the first casing and forms the front side of the case, a second-3 casing which is bent in the vertical direction at the left edge of the first casing and forms the left side of the case, a second-4 casing which is bent in the vertical direction at the rear edge of the first casing and forms the rear side of the case, a third-1 casing which is bent in the right direction at the top of the second-1 casing and supports the upper bracket, a third-3 casing which is bent in the left direction at the top of the second-3 casing and supports the upper bracket, and a third-4 casing which is bent in the front direction at the top of the second-4 casing and supports the upper bracket.

The boss portion of an electric range according to an embodiment of the present disclosure may be disposed closer to the second-2 casing than to the second-4 casing.

An electric range according to an embodiment of the present disclosure may further include an operation unit disposed between the upper bracket and the second-2 casing.

The third-4 casing of an electric range according to an embodiment of the present disclosure may include a third-41 casing and a third-42 casing disposed to the right side of the third-41 casing.

The upper bracket of an electric range according to an embodiment of the present disclosure may include a first upper bracket supported by the third-1 casing, the third-42 casing, and the boss portion, and a second upper bracket supported by the third-3 casing, the third-41 casing, and the boss portion.

The boss portion of an electric range according to an embodiment of the present disclosure may include a boss bottom plate which forms the bottom surface of the boss portion, a boss side plate which is bent upward from an edge of the boss bottom plate, and a first boss which is disposed on the upper surface of the boss bottom plate and supports the second upper bracket.

The first boss of an electric range according to an embodiment of the present disclosure may include a body having a cylindrical shape whose cross-sectional area narrows as it goes upward, and at least one rib formed radially along the outer peripheral surface of the body.

The supporter of an electric range according to an embodiment of the present disclosure may further include a first side plate which is bent upward at a boundary between the boss bottom plate and the mounting bottom plate forming the bottom surface of the mounting portion. The boss portion may further include a second boss which is secured to the first side plate by a securing portion extending in a direction opposite to the direction in which the boss portion is disposed, and supports the first upper bracket.

The case of an electric range according to an embodiment of the present disclosure may further include a bent portion which is formed along the edge of the first casing and is formed to be convex in the vertical direction.

The mounting portion of an electric range according to an embodiment of the present disclosure may include a first bottom plate forming the bottom surface of the mounting portion, and a first side plate formed by bending upward from an edge of the first bottom plate.

The boss portion of an electric range according to an embodiment of the present disclosure may include a second bottom plate which adjoins the first bottom plate and forms the bottom surface of the boss portion, a second side plate formed by bending upward at an edge of the second bottom plate, and at least one first boss which is disposed on an upper portion of the bottom plate and supports the upper bracket.

The boss portion of an electric range according to an embodiment of the present disclosure may further include a second boss which is secured by a securing portion extending in a direction opposite to the direction in which the boss portion is disposed, from the first side plate which is formed by bending upward at the boundary between the first bottom plate and the second bottom plate.

The upper bracket of an electric range according to an embodiment of the present disclosure may include a first upper bracket supported by the case and the second boss, and a second upper bracket supported by the case and the first boss.

The boss portion of an electric range according to an embodiment of the present disclosure may be disposed closer to the front of the case than to the rear of the case.

### [Advantageous Effects]

The manufacturing cost of an electric range according to an embodiment of the present disclosure can be reduced by simplifying the manufacturing process and components.

The electric range according to an embodiment of the present disclosure can improve the cooling efficiency of an inner space where electronic components and the like are installed.

The electric range according to an embodiment of the present disclosure can improve cooling efficiency by an air blower fan.

In the electric range according to an embodiment of the present disclosure, an air blower fan that discharges air into an inner space intake a sufficient amount of air.

The electric range according to an embodiment of the present disclosure can limit or prevent air inside the electric range, in addition to external air, from flowing into an air blower fan.

In the electric range according to an embodiment of the present disclosure, the air discharged from an air blower fan can cool components on a printed circuit board more efficiently.

In the electric range according to an embodiment of the present disclosure, the air discharged from an air blower fan cannot not be discharged to the lower surface of a printed circuit board, but only to the upper surface of the printed circuit board.

The case of the electric range according to an embodiment of the present disclosure can filter out foreign substances in the air flowing into an air blower fan and at the same time have appropriate rigidity.

The electric range according to an embodiment of the present disclosure can prevent a decrease in cooling efficiency due to deformation of internal components.

The electric range according to an embodiment of the present disclosure can limit or prevent air inside the electric range from flowing into an air blower fan even if internal components are deformed.

The electric range according to an embodiment of the present disclosure can efficiently prevent sagging of an upper bracket supporting a heating unit.

The electric range according to an embodiment of the present disclosure can reduce the number of man-hours for manufacturing and can be manufactured less expensively.

Detailed effects of the present disclosure are described together with the above-described effects in the detailed description of the disclosure.

### [Description of Drawings]

FIG. 1 a perspective view of an electric range according to an embodiment of the present disclosure.
FIG. 2 is a perspective view of a main body of the electric range of FIG. 1 according to an embodiment of the present disclosure.
FIGS. 3 and 4 are respectively exploded perspective views of an electric range according to an embodiment of the present disclosure.
FIG. 5 is a perspective view of an air guide of an electric range according to an embodiment of the present disclosure.
FIG. 6 is an exploded perspective view of the supporter and air blower fan of an electric range according to an embodiment of the present disclosure, viewed from the top.
FIG. 7 is a plan view of the supporter of an electric range according to an embodiment of the present disclosure.
FIG. 8 is a plan view of the case of an electric range according to an embodiment of the present disclosure.
FIG. 9 is a perspective view of the electric range according to an embodiment of the present disclosure, with an upper plate, heating modules, and an upper bracket removed therefrom.
FIG. 10 is a cross-sectional view of an electric range according to an embodiment of the present disclosure, taken along line A-A'.
FIG. 11 is a perspective view of an electric range according to an embodiment of the present disclosure, with an air blower fan coupled to a second support.
FIG. 12 is an exploded perspective view of the second support and air blower fan of FIG. 11, viewed from an upper direction.
FIG. 13 is an exploded perspective view of the second support and air blower fan of FIG. 11, viewed from a lower direction.
FIG. 14 is a plan view of the second support of the electric range of FIG. 11 according to an embodiment of the present disclosure.
FIG. 15 is a cross-sectional view of the second support of the electric range of FIG. 14 according to an embodiment of the present disclosure , taken along line B-B'.
FIG. 16 is a plan view of a case of an electric range according to an embodiment of the present disclosure.
FIG. 17 is a cross-sectional view of the case of the electric range of FIG. 16 according to an embodiment of the present disclosure, taken along line D-D'.
FIG. 18 is an enlarged view of the intake portion 140 of the cross-sectional view of the electric range of FIG. 17 according to an embodiment of the present disclosure.
FIG. 19 is a plan view of an electric range according to an embodiment of the present disclosure, with an upper plate, heating modules, and an upper bracket removed therefrom.
FIG. 20 is a cross-sectional view of the electric range of FIG. 19 according to an embodiment of the present disclosure, illustrating a region in which the air blower fan is disposed.
FIG. 21 is an enlarged view of a boss of a second support of an electric range according to an embodiment of the present disclosure.
FIG. 22 is a cross-sectional view of a boss portion of a second support of an electric range of FIG. 15 of an embodiment of the present disclosure.

### [Mode for Invention]

The above-described objectives, features and advantages are specifically described with reference to the attached drawings hereunder such that one having ordinary skill in the art to which the present disclosure pertains may easily implement the technical spirit of the disclosure. In describing the disclosure, detailed description of known technologies in relation to the disclosure is omitted if it is deemed to make the gist of the present disclosure unnecessarily vague. Below, preferred embodiments of the present disclosure are specifically described with reference to the attached drawings. Throughout the drawings, identical reference numerals denote identical or similar components.

In describing components of the present disclosure, the terms such as first, second, and the like may be used. These terms are only intended to distinguish a component from another component, and, unless explicitly stated otherwise, a first component may denote a second component.

Hereinafter, when it is said that an arbitrary element is disposed at "an upper portion (or a lower portion)" of an element or disposed "above (or below)" an element, this may not only mean that the arbitrary element is disposed in contact with an upper surface (or a lower surface) of the element, but also mean that another element may be interposed between the element and the arbitrary element disposed above (or below) the element.

Also, when it is said that a certain element is "connected", "coupled", or "accessed" to another element, this may mean that the elements are directly connected or coupled to each other, but it should be understood that another element may be "interposed" between the elements or the elements may be "connected", "coupled", "accessed" to each other via another element.

Through the specification, each element may be singular or plural unless particularly described otherwise.

A singular expression used herein encompasses a plural expression unless the context clearly indicates otherwise. In the present application, terms such as "consisting of" or "including" should not be interpreted as necessarily including all of various elements or various steps described herein and should be interpreted as indicating that some of the elements or some of the steps may not be included or additional elements or steps may be further included.

Throughout the specification, "A and/or B" may refer to A, B, or A and B unless particularly described otherwise, and "C to D" refers to C or more and D or less unless particularly described otherwise.

Hereinafter, an electric range according to some embodiments of the present disclosure will be described.

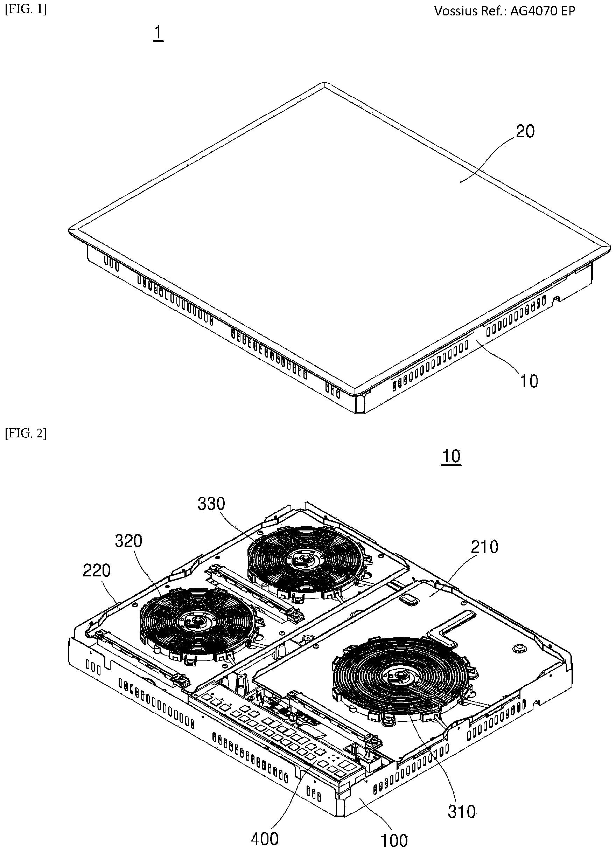

FIG. 1 is a perspective view of an electric range 1 according to an embodiment of the present disclosure, and FIG. 2 is a perspective view of a main body 10 of the electric range 1 according to an embodiment of the disclosure.

Referring to FIG. 1 , the electric range 1 according to this embodiment of the present disclosure may include a main body 10 and an upper plate 20. Referring to FIG. 2 , the main body 10 may include a case 100, a first upper bracket 210, a second upper bracket 220, a first heating unit or heater 310, a second heating unit or heater 320, a third heating unit or heater 330, and an operation unit 400.

Hereinafter, it will be described that a portion of the electric range 1 on which the operation unit 400 is disposed is defined as a front side or front surface; a portion opposite the front side or front surface is defined as a rear side or rear surface; a right of the electric range 1 as viewed from the front surface is defined as a right side or right surface; and a left of the electric range 1 as viewed from the front is defined as a left side or left surface.

The main body 10 may include at least one heater and a drive unit that operates the heater. The at least one heater may heat an object to be heated. The drive unit may include the operation unit 400 and multiple components disposed on a printed circuit board.

The case 100 may receive the printed circuit board having various components thereon, and a support on which the printed circuit board is mounted. The case 100 may be provided in the form of a generally cuboidal box which is open at a top thereof. The case 100 may form an accommodation space in which components are accommodated.

The case 100 may serve to protect components of the electric range. The case 100 may be formed of aluminum, but is not limited thereto. In addition, according to an embodiment, the case 100 may be insulated to suppress leakage of heat generated by the heaters 310, 320, and/or 330 to outside of the electric range 1.

The first upper bracket 210 may support the first heater 310, and the second upper bracket 220 may support the second heater 320 and the third heater 330. The first upper bracket 210 and the second upper bracket 220 may be coupled to the case 100.

The first heater 310, the second heater 320, and the third heater 330 may heat an object to be heated. The heaters 310, 320, 330 may heat the object to be heated through induction heating or through resistance heating. Alternatively, some of the heaters 310, 320, 330 may heat the object to be heated by induction heating and the others may heat the object to be heated by resistance heating. When the object to be heated is heated through induction heating, high-frequency power may be applied by the working coils of the heaters 310, 320, 330. When high-frequency power is applied to the working coils, a magnetic field is generated around the working coils, and eddy current may be generated in the object to be heated by the magnetic field. Accordingly, the object to be heated, which is formed of a metal, may be heated by the eddy current.

The first heater 310, the second heater 320, and the third heater 330 may be disposed on a lower portion of the upper plate 20. The first heater 310 may be mounted on the first upper bracket 210, and the second heater 320 and the third heater 330 may be mounted on the second upper bracket 220.

Hereinafter, in the specification, a case where the electric range includes three heaters that heat an object to be heated by induction heating and two upper brackets is described. However, a type and number of heaters and a number of upper brackets can be varied as needed.

The operation unit 400 allows to input a command to operate the electric range 1. The operation unit 400 may be disposed in front of the first upper bracket 210. In addition, the operation unit 400 may be disposed at the front of the electric range between the upper plate 20 and the case 100 for user convenience. However, a position of the operation unit 400 may be changed differently from that shown in FIG. 1, as needed.

The operation unit 400 may include a plurality of key switches. A user may control operation of the electric range by inputting a command to the operation unit 400 using the key switches.

An upper surface of the operation unit 400 may be placed under a cover plate 21. The operation unit 400 may be disposed on a location corresponding to an input interface on the cover plate 21. In this case, the operation unit 400 and the input interface may be connected to each other by a touch input method.

The upper plate 20 may be coupled to an upper portion of the main body 10, and may provide a space in or on which an object to be heated is seated.

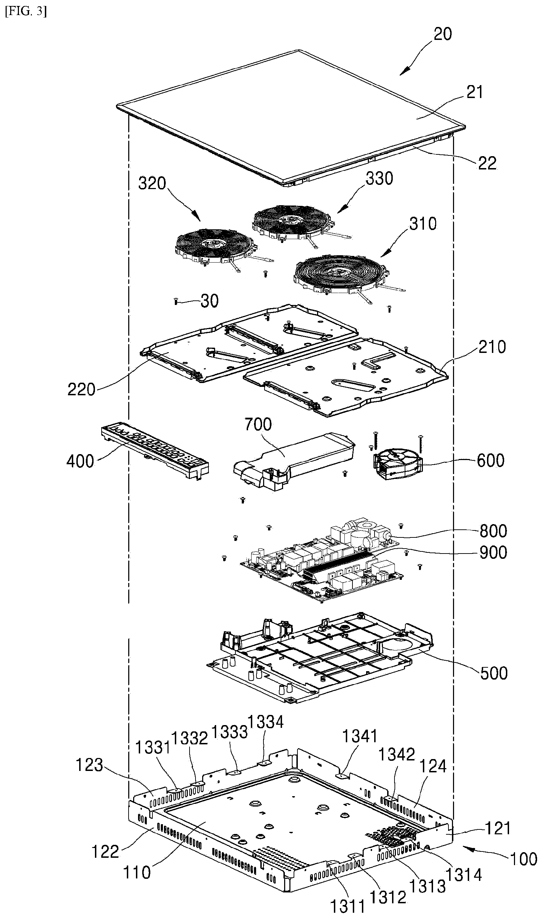

FIG. 3 is an exploded perspective view of an electric range according to an embodiment of the present disclosure. Referring to FIG. 3, the electric range 1 according to the embodiment of the present disclosure may include the main body 10 and the upper plate 20. In addition, the main body 10 of the electric range 1 according to the embodiment of the present disclosure may include the case 100, the first upper bracket 210, the second upper bracket 220, the first heater 310, the second heater 320, the third heater 330, the operation unit 400, a support 500, an air blower fan 600, an air guide 700, a printed circuit board 800, and a heat sink 900. In addition, the upper plate 20 of the electric range 1 according to the embodiment of the present disclosure may include a cover plate 21 and a cover bracket 22.

The cover plate 21 may close an upper portion of the accommodation space defined by the case 100. The cover plate 21 may serve to protect various components inside of the accommodation space defined by the case 100.

In addition, the cover plate 21 may have an upper surface on which an object to be heated is disposed. When the electric range 1 operates in an induction heating manner, a magnetic field generated by the heaters 310, 320, and/or 330 may pass through the cover plate 21 and reach the object to be heated. The cover plate 21 may be formed of a ceramic material, but is not limited thereto.

The cover plate 21 may be provided on the upper surface thereof with an input interface configured to receive a user input. The input interface may be disposed in a specific region on the upper surface of the cover plate 21, and may display a specific image. The input interface may receive a touch input from a user, and the electric range may be operated based on the received touch input. The touch input may be input to the operation unit 400.

In addition, a display may be disposed in a specific region of the upper surface of the cover plate 21 to display an operating state of the electric range 1. For example, an optical display region may be formed on the upper surface of the cover plate 21. Also, a light source unit may be disposed on a lower portion of the cover plate 21. The light emitted from the light source unit may be delivered to a user through the optical display region. In this case, the optical display region may correspond in location of the light source unit. When a plurality of light source units is provided, an equal number of optical display regions may be formed on the upper surface of the cover plate 21. The light source unit may be mounted on the first upper bracket 210 and/or the second upper bracket 220.

The cover bracket 22 may support the cover plate 20.

The cover bracket 22 may be disposed outside of the case 100, and may be coupled to the case 100. For example, the cover bracket 22 and the case 100 may be coupled to each other using a fastener, such as a bolt.

The cover bracket 22 may have a generally rectangular shape. Each side of the cover bracket 22 may be disposed at a location corresponding to each side of the cover plate 21.

A shape, function and the like of case 100 may be the same as described above with reference to FIG. 1 and FIG. 2.

The case 100 may be formed of a generally plate-shaped material fabricated in the form of a box to be used.

The case 100 may include a first casing 110, second casings 121, 122, 123, 124, and third casings 1311, 1312, 1313, 1314, 1331, 1332, 1333, 1334, 1341, 1342.

The first casing 110 may form a bottom surface of the case 100. The first casing 110 may have a generally rectangular shape. The support 500 may be mounted on the upper surface of the first casing 110.

The first casing 110 may be provided with at least one air vent to facilitate cooling of the printed circuit board 800 disposed therein and electronic components mounted on the printed circuit board 800. More specifically, the first casing 100 may be formed with an intake portion through which external air is introduced thereinto and a discharge portion through which internal air is discharged therefrom.

The second casing 121, 122, 123, 124 may be bent from the first casing 110 and may define an external appearance of the case 100. According to an embodiment, a second-1 casing 121 may form a right surface of the case 100, a second-2 casing 122 may form a front surface of the case 100, a second-3 casing 123 may form a left surface of the case 100, and a second-4 casing 124 may form a rear surface of the case 100.

The second casing 121, 122, 123, 124 may be vertically bent from an edge of the first casing 110 to form an exterior of the case 100. The second casing 121, 122, 123, 124 may be disposed on the respective sides of the first casing 110 having a generally rectangular shape, respectively. The second casing 121, 122, 123, 124 may reinforce an overall rigidity of the case 10.

That is, the second casing 121, 122, 123, 124 bent from the first casing 110 may prevent the plate-shaped first casing 110 from being warped or damaged by a weight of internal components or by an external force. In addition, the first casing 110 may have a bent portion to reinforce the overall rigidity of the case 10, as described hereinafter.

The second casing 121, 122, 123, 124 may have multiple slit-shaped ventilation holes. The ventilation holes allow the inside and outside of the case 100 to communicate with each other to allow a flow of air into/out of the case 100, thereby contributing to cooling of components received in the case 100.

The third casing 1311, 1312, 1313, 1314, 1331, 1332, 1333, 1334, 1341, 1342 may support the first upper bracket 210 and the second upper bracket 220.

The third casing 1311, 1312, 1313, 1314, 1331, 1332, 1333, 1334, 1341, 1342 may be formed to be bent from the second casing 121, 123, 124. Specifically, the third-1 casing 1311, 1312, 1313, 1314 may be formed to be bent from the second-1 casing 121, the third-3 casing 1331, 1332, 1333, 1334 may be formed to be bent from the second-3 casing 123, and the third-4 casing 1341, 1342 may be formed to be bent from the second-4 casing 124.

The third-1 casing 1311, 1312, 1313, 1314 and the third-42 casing 1342 may have a hole for coupling with the first upper bracket 210. The bottom surface of the first upper bracket 210 is seated on upper surfaces of the third-1 casing 1311, 1312, 1313, 1314 and third-42 casing 1342, and then, the first upper bracket 210 may be coupled to the third-1 casing 1311, 1312, 1313, 1314 and the third-42 casing 1342 using a coupling member, such as a bolt. The third casing 1331, 1332, 1333, 1334 and the third-41 casing 1341 may have a hole for coupling with the second upper bracket 210. The bottom surface of the second upper bracket 220 is seated on upper surfaces of the third casing 1331, 1332, 1333, 1334 and the third-41 casing 1341, and then, the second upper bracket 210 may be coupled to the third casing 1331, 1332, 1333, 1334 and the third-41 casing 1341 using a coupling member, such as a bolt.

The operation unit 400 may be mounted on the support 500. The operation unit 400 may be coupled to the support 500 by interference fit.

The support 500 may support the printed circuit board 800 and the air blower fan 600. The support 500 may be coupled to the first casing 110 of the case 100 using a bolt and the like.

Various electronic components may be mounted on the printed circuit board 800 to operate the heat sink 900, the heaters 310, 320, 330, and the like. The printed circuit board 800 may be mounted on the second support 500 using a bolt and the like.

The electronic components mounted on the printed circuit board 800 may be powered by an external power source and may output high-frequency power to the heaters 310, 320, 330. In addition, the electronic components mounted on the printed circuit board 800 may be electrically connected to the operation unit 400, and may operate the heaters 310, 320, 330 in response to a user command input via the operation unit 400. According to an embodiment, the electronic components mounted on the printed circuit board 800 may communicate with an external device through a wire or electronically. That is, the electronic components mounted on the printed circuit board 800 may function as a controller that controls an overall operation of the electric range 1.

A device that generates a lot of heat, such as a switching device that generates high-frequency power, may be attached to the heat sink 900. The heat sink 900 may cool the device attached thereto.

The air blower fan 600 may take in air through an inlet thereof and may discharge the air through an outlet thereof. The air blower fan 600 may take in external air through a case intake portion formed in the first casing 110. In addition, the air discharged through the discharge port of the air blower fan 600 may be discharged to the accommodation space defined by the case 100. At least a portion of the air discharged through the discharge port of the air blower fan 600 may be guided to the heat sink 900 by the air guide 700 to cool the heat sink 900. The air guided by the air guide 700 may be discharged to the outside through a case outlet portion formed in the first casing 110.

The air blower fan 600 may be mounted on the support 500. The air blower fan 600 may be mounted on the support 500 using a coupling member, such as a bolt.

According to an embodiment, the air blower fan 600 may be coupled to the case 100 using a coupling member, such as a bolt. More specifically, the bolt may be coupled to the first casing 110 of the case 100 through the air blower fan 600 and the support 500. In this way, it is possible to maintain coupling between the air blower fan 600, the second support 500, and the case 100 even when the first casing 110 and the like undergoes deformation and to prevent air inside of the electric range 1 from being introduced into the air blower fan 600.

The air guide 700 may guide the air discharged from the air blower fan 600 to move to the discharge portion of the first casing 110 of the case 100 via the heat sink 900. The air guide 700 may be mounted on the printed circuit board 800. More specifically, the air guide 700 may be mounted on the printed circuit board 800 to completely cover the heat sink 900 mounted on the printed circuit board 800.

Basic functions of the first upper bracket 210 and the second upper bracket 220 may be the same as described above with reference to FIG. 1 and FIG. 2.

The first upper bracket 210 and the second upper bracket 220 may be secured to the case 100. The first upper bracket 210 and the second upper bracket 220 may be formed of aluminum, but are not limited thereto.

The firstupper bracket210 may be disposed on a lower portion of the first heater310, and the second upper bracket 220 may be disposed on a lower portion of the second heater 320 and the third heater 330. The first upper bracket 210 and the second upper bracket 220 may be disposed between the upper plate 20 and the space accommodating the printed circuit board 800 and the electronic components. Due to this structure, the first upper bracket 210 and the second upper bracket 220 may serve as a shield to prevent electromagnetic fields and/or electromagnetic waves generated from the heaters 310, 320, 330 from reaching the printed circuit board 800 and the electronic components. That is, the first upper bracket 210 and the second upper bracket 220 may serve to improve the performance of electromagnetic compatibility (EMC) and electromagnetic interference (EMI) of the printed circuit board.

Each of the first upper bracket 210 and the second upper bracket 220 may include a first upper plate and a second upper plate.

The first upper plate may form a bottom surface of each of the first upper bracket 210 and the second upper bracket 220. In addition, the heaters 310, 320, 330 may be mounted on the first upper plate.

The second upper plate may be provide to be bent from the first upper plate in a vertical direction of the electric range 1. The second upper plate may be formed to be vertically bent from an edge of the first upper plate.

The second upper plate may be disposed on each side of the first upper plate having a generally rectangular shape. The second upper plate may reinforce an overall rigidity of the first upper bracket 210 and second upper bracket 220. That is, the second upper plate bent from the first upper plate may prevent the first upper plate having a plate-shaped from being warped or damaged by the weight of internal components including the heaters 310, 320, 330 or by an external force.

Due to the structure described above with reference to FIG. 3, all of the components of the electric range may be assembled on the upper portion of the case 100. Accordingly, a manufacturing process of the electric range may be simplified, thereby improving production efficiency.

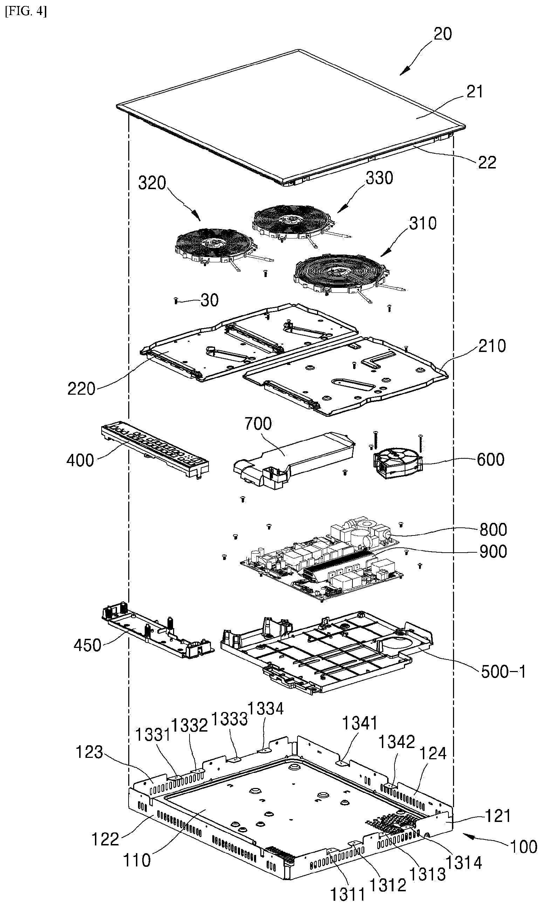

FIG. 4 is an exploded perspective view of the electric range 1 according to an embodiment of the present disclosure, and is the same as that described in FIG. 3 except that the supporter includes a first supporter 450 and a second supporter 500-1.

The first support 450 and the second support 500-1 may be mounted on the upper surface of the first casing 110.

The first support 450 may support the operation unit 400. The first support 450 may be coupled to the first casing 110 of the case 100 using a bolt and the like. In this case, the operation unit 400 may be coupled to the first support 450 by interference fit.

The second support 500-1 may support the printed circuit board 800 and the air blower fan 600. The second support 500-1 may be coupled to the first casing 110 of the case 100 using a bolt and the like. The printed circuit board 800 and the air blower fan 600 may be mounted on the second support 500-1 using a fastener such as a bolt.

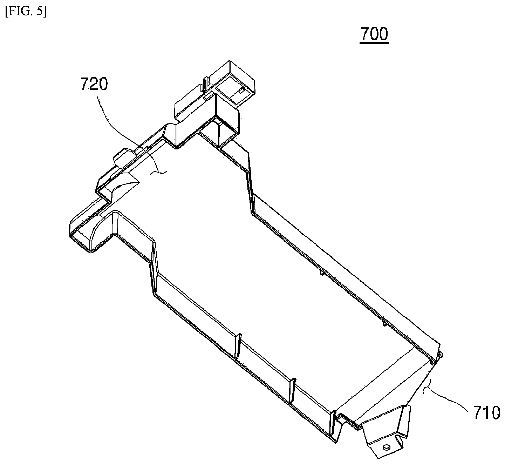

FIG. 5 is a perspective view of the air guide 700 of an electric range according to an embodiment of the present disclosure wherein the air guide 700 as viewed from a front right lower side is illustrated.

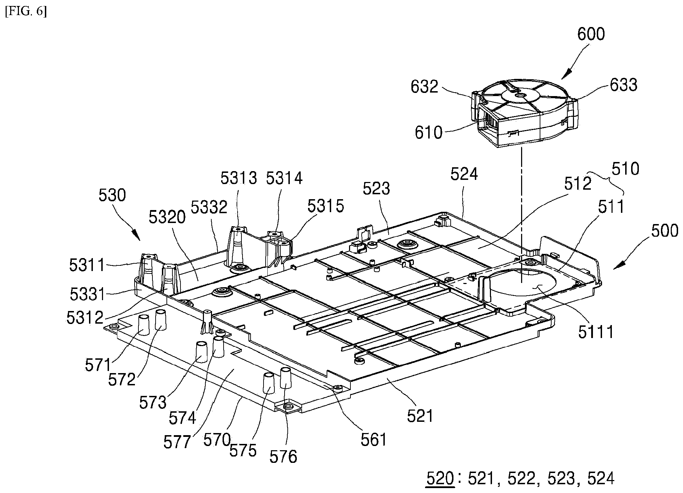

The air guide 700 may include an inlet 710 formed at the rear and an outlet 720 formed at the front lower side. The inlet 710 of the air guide 700 may be connected to the discharge port (610 in FIG. 6) of the air blower fan 600, and the outlet 720 of the air guide 700 may be connected to the discharge hole (561 in FIG. 6) of the supporter 500. The lower surface of the air guide 700, except for the outlet 720 (i.e., the portion connected to the discharge hole (561 in FIG. 6)) may be closed by the supporter 500. Additionally, a heat sink and the like may be placed in the space formed by the air guide 700 and the supporter 500.

The air discharged from the air blower fan 600 flows into the space between the air guide 700 and the supporter 500 through the inlet 710 of the air guide 700. Additionally, the air in the space between the air guide 700 and the supporter 500 is discharged through the outlet 720 of the air guide 700 and the discharge hole 561 of the supporter 500.

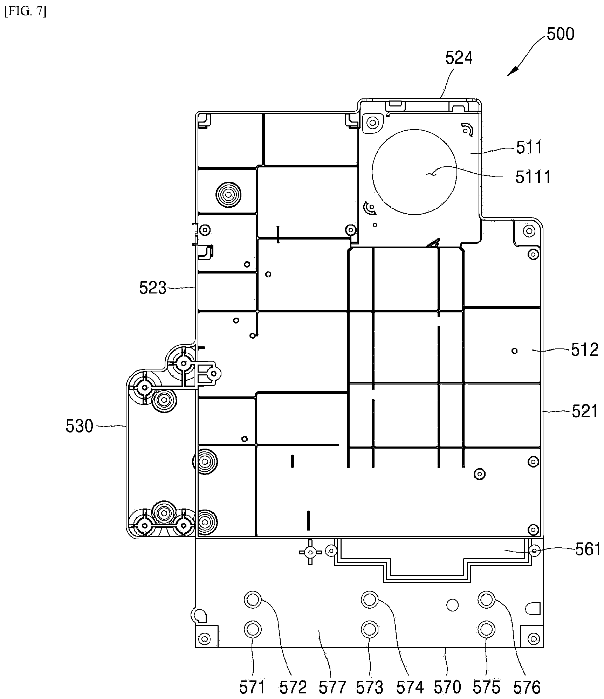

FIG. 6 is an exploded perspective view of the supporter 500 and air blower fan 600, and FIG. 7 is a plan view of the supporter 500.

The air blower fan 600 may be disposed on the upper surface of the support 500. The air blower fan 600 may include the discharge port 610, an inlet and a securing portion 632, 633. The inlet may be disposed on the lower surface of the air blower fan 600.

The support 500 may include a first bottom plate 510 and a side plate 520.

The first bottom plate 510 may form a bottom surface of the support 500. The printed circuit board 800 and the air blower fan 600 may be mounted on an upper surface of the first bottom plate 510. The first bottom plate 510 may include a first region 511 in which the air blower fan 600 may be mounted and a second region 512 in which the printed circuit board 800 may be mounted. The first region 511 may have an intake hole 5111 through which air is drawn in.

The side plate 520 may be provided to be bent from the first bottom plate 510 in a vertical direction of the electric range. The side plate 520 may be vertically bent from an edge of the first bottom plate 510.

The side plate 520 may be disposed on each side of the first bottom plate 510 having a generally rectangular shape. That is, the side plate 520 may include a first side plate 521 disposed on a right surface of the first bottom plate 510, a second side plate 522 disposed on a front surface of the first bottom plate 510, a third side plate 523 disposed on a left surface of the first bottom plate 510, and a fourth side plate 524 disposed on a rear surface of the first bottom plate 510. The first side plate 521 may adjoin the second-1 casing (121 in FIG. 3) of the case 100, the second side plate 522 may adjoin the second-2d casing (122 in FIG. 3) of the case 100, and the fourth side plate 524 may adjoin the second-4 casing (124 in FIG. 3) of the case 100. Hereinafter, the term "adjoin" includes the meaning of not only being completely in close contact but also being placed fairly close to each other.

The side plate 520 may reinforce an overall rigidity of the support 500. That is, the side plate 520 bent from the first bottom plate 510 may prevent the first bottom plate 510 from being warped or damaged by a weight of internal components, such as the printed circuit board 800 and the air blower fan 600, or by an external force.

The support 500 may further include a boss portion 530. The boss portion 530 may include a plurality of bosses 5311, 5312, 5313, 5314, 5315. Each of the plurality of bosses 5311, 5312, 5313, 5314, 5315 may support either the first upper bracket 210 or the second upper bracket 220. According to an embodiment, the boss 5315 may support the first upper bracket 210 and the bosses 5311, 5313 may support the second upper bracket 220. To do this, the boss 5315 may be coupled to the first upper bracket 210 using a coupling member, such as a bolt, and the bosses 5311, 5313 may be coupled to the second upper bracket 220 using a coupling member such as a bolt.

The boss portion 530 may include a bottom plate 5320 and side plates 5331, 5332. The bottom plate 5320 may form the bottom surface of the boss portion 530. The side plates 5331 and 5332 may be formed to be bent from the edge of the bottom plate 5320 in the vertical direction. The side plates 5331 and 5332 can improve the overall rigidity of the boss portion 530.

According to an embodiment, the boss portion 530 may be excluded.

In addition, the supporter 500 may further include an operation support portion 570 that supports the operation unit 400. The operation support portion 570 may include a second bottom plate 577 protruding forward from the first bottom plate 510, and a plurality of bosses 571, 572, 573, 574, 575, 576 disposed on the second bottom plate 577. A coupling unit that is inserted into each of the bosses 571, 572, 573, 574, 575, 576 may be formed on the lower surface of the operation unit 400. As described above, the coupling unit of the operation unit 400 may be coupled to the bosses 571, 572, 573, 574, 575, 576 of the operation support portion 570 by interference fit.

The second bottom plate 577 may be formed higher than the first bottom plate 510. That is, an air flow path may be formed below the second bottom plate 577. Additionally, a case discharge unit may be formed in the region where the second bottom plate 577 is located in the case (100 in FIG. 3).

In addition, the support 500 may include the discharge hole 561 to be coupled to the outlet 720 of the air guide (700 in FIG. 4). The discharge hole 561 may be formed between the operation support portion 570 and the first bottom plate 510.

That is, the supporter 500 of an electric range according to an embodiment of the present disclosure may include a main support unit on which the air blower fan 600 and/or the printed circuit board 800 is mounted, and an operation support portion 570 that supports the operation unit 400. The main support unit may include a first region 511 in which the air blower fan 600 may be mounted and a second region 512 in which the printed circuit board 800 may be mounted. In other words, according to one embodiment of the present disclosure, the electric range may be configured to support both the printed circuit board 800 and the operation unit 400 using one supporter 500. Accordingly, the number of components can be reduced and the assembly process can be simplified.

The first region 511 may include an intake hole 5111 that provides a passage through which air is drawn into to the air blower fan 600. The size of the intake hole 511 may be the same as or greater than the size of the air blower fan 600. The first region 511 may include fan securing holes 5112, 5113 for mounting the air air blower fan 600. The air blower fan 600 may be secured to the supporter 500 by a coupling member such as a bolt that passes through each of the securing portions 632, 633 of the air blower fan 600 and each of fan securing holes 5112, 5113.

When the supporter 500 is coupled to the case 100, a distance between the upper surface of the first casing 110 of the case 100 and the lower surface of the first region 511 may be greater than a distance between the upper surface of the first casing 110 and the second region 512. In other words, the supporter 500 may perform the function of keeping the inlet 620 of the air blower fan 600 spaced apart from the upper surface of the first casing 110 by a predetermined distance. This can achieve the same effect as substantially increasing the intake area of the air blower fan 600.

In addition, when the supporter 500 is coupled to the case 100, the distance between the upper surface of the first casing 110 of the case 100 and the lower surface of the operation support portion 570 may be greater than a distance between the upper surface of the first casing 110 and the lower surface of the second region 512. An air flow path may be formed between the lower surface of the operation support portion 570 and the upper surface of the first casing 110.

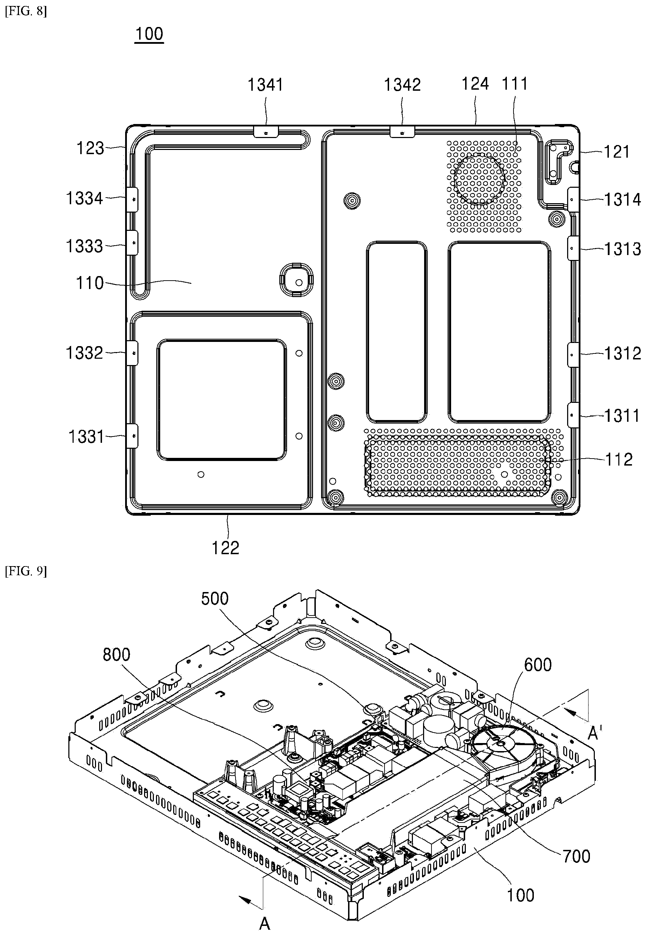

FIG. 8 is a plan view of the case 100 of the electric range 1 according to an embodiment of the present disclosure.

The structures and functions of second casings 121, 122, 123, 124 and the third casings 1311, 1312, 1313, 1314, 1331, 1332, 1333, 1334, 1341, 1342 are the same as described above with reference to FIG. 3.

The first casing 110 of the case 100 according to an embodiment of the present disclosure may include a case intake portion 111 and a case outlet portion 112.

The case intake portion 111 provides a passage through which air is drawn into the inlet of the air blower fan 600 when the air blower fan 600 is in operation. The case intake portion 111 may be formed of a porous portion having multiple holes.

When the support 500 is mounted on the case 100, the case intake portion 111 may correspond in location to the first region 511. In addition, the case intake portion 111 may have a larger area than the inlet of the air blower fan 600. According to an embodiment, the case intake portion 111 may have the same area as the first region 511.

The case outlet portion 112 provides a passage through which air having passed through the air guide (700 in FIG. 3 and FIG. 5) is discharged to the outside. The case outlet portion 112 may be formed of a porous portion having multiple holes.

When the supporter 500 is mounted on the case 100, the case outlet portion 112 may be formed at a location corresponding to the location of the operation support portion 570 of the supporter 500.

That is, according to an embodiment of the present disclosure, the lower part of the operation support portion 570 can be used as an air flow path, and at the same time can form the case outlet portion 112 in the lower part of the operation support portion 570. Therefore, the area of the flow path of the part where the air is discharged can be further increased, and as a result, the flow of air for cooling the inner space can be made more smooth.

FIG. 9 is a perspective view of the electric range according to an embodiment of the present disclosure, with an upper plate, heating modules, and an upper bracket removed therefrom.

As described above, the support 500 (or the second support 500-1) may be mounted on the case 100. More specifically, the support 500 (or the second support 500-1) may be mounted on the upper surface of the first casing (110 in FIG. 3) of the case 100 using a coupling member, such as a bolt. In addition, the second support 500 (or the second support 500-1) may include an intake hole and a discharge hole. The intake hole of the support 500 may adjoin the case intake portion (111 in FIG. 8) of the first casing (110 in FIG. 3) of the case 100. The discharge hole of the support 500 (or the second support 5001) may adjoin the discharge portion of the first casing 110 of the case 100.

The air blower fan 600 and the printed circuit board 800 may be mounted on the support 500 (or the second support 500-1). Various electronic components including the heat sink (900 in FIG. 3) may be mounted on the upper surface of the printed circuit board 800. The inlet of the air blower fan 600 may adjoin the intake hole of the support 500 (or the second support 500-1). The discharge port of the air blower fan 600 may adjoin one end of the air guide 700.

The air guide 700 may be mounted on the upper surface of the printed circuit board 800 to cover the heat sink 900. The air guide 700 may be open at a rear and bottom thereof. The air guide 700 may have a generally cuboidal shape. The inlet (710 in FIG. 5) formed on the rear surface of the air guide 700 may adjoin the discharge port of the air blower fan 600 and the outlet (720 in FIG. 5) formed on the front lower surface of the air guide 700 may adjoin the discharge hole (561 in FIG. 6 and FIG. 7) of the support 500 (or the second support 500-1).

When the air blower fan 600 is operated, the air outside of the electric range 1 may be drawn into the inlet of the air blower fan 600 via the intake portion of the case 100 and the intake hole of the support 500 (or the second support 500-1). In addition, the air discharged through the discharge port of the air blower fan 600 may be moved along the air guide 700 and then may be discharged to the outside of the electric range 1 via the discharge hole of the support 500 (or the second support 500-1) and the discharge portion of the case.

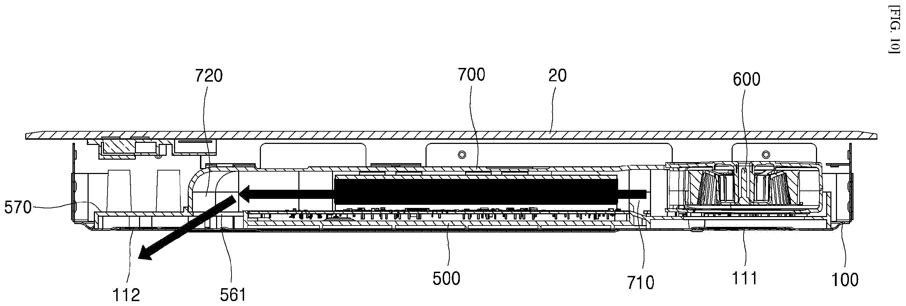

FIG. 10 is a cross-sectional view of an electric range according to an embodiment of the present disclosure, illustrating a cross-section taken along line A-A' of FIG. 9.

Referring to FIG. 10, the air flow in an electric range according to an embodiment of the present disclosure will be described.

When the air blower fan 600 operates, the air existing outside the electric range 1 may pass through the case intake portion 111 and the intake hole (5111 in FIGS. 5 and 6) of the supporter 500 and may be drawn into the air blower fan 600, and may be discharged through the discharge port (610 in FIG. 5) of the air blower fan 600. The air discharged through the discharge port of the air blower fan 600 passes through the inlet 710 of the air guide 700 and then moves along the air guide 700. As the air moves along the air guide 700, it can cool the heat sink and the like.

The air moving along the air guide 700 may pass through the outlet 720 of the air guide 700 and the discharge hole 561 of the supporter 500, and then may move between the operation support portion 570 of the supporter 500 and the first casing 110, and may be discharged to the outside of the electric range 1 through the case discharge portion 112.

That is, according to an embodiment of the present disclosure, the supporter 500 may be configured to support both the printed circuit board 800 and the operation unit 400. In this case, both the printed circuit board 800 and the operation unit 400 may be implemented to be assembled on the upper part of the supporter 500. For example, the printed circuit board 800 may be secured to the supporter 500 using a fastening mechanism such as a bolt, and the operation unit 400 may be secured to the supporter 500 by interference fit. Accordingly, the number of components can be reduced and the assembly process can be simplified.

In addition, according to an embodiment of the present disclosure, the lower portion of the supporter 500 that supports the operating unit 400 can be used as a flow path for discharged air. In addition, the case discharge portion 112 may be formed below the portion of the case supporting the operation unit among the cases on which the supporter 500 is mounted. With the structure, the area of the electric range 1 where air is discharged can be increased, which can improve cooling efficiency.

In addition, according to an embodiment of the present disclosure, heated air may be discharged from the bottom of the electric range. Therefore, overheating of the operation unit due to heated air can be minimized.

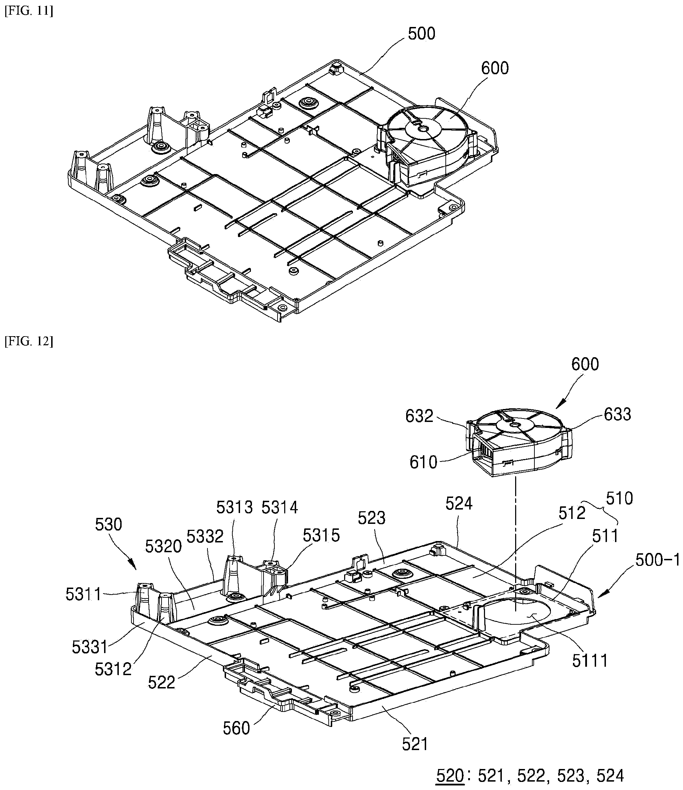

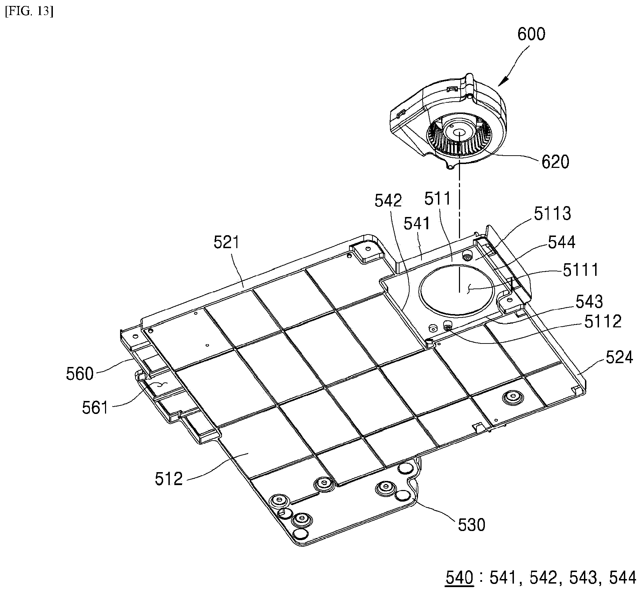

FIG. 11 is a perspective view of a second support 500-1 of an electric range according an embodiment of the present disclosure, with an air blower fan coupled thereto. FIG. 12 is an exploded perspective view of the second support 500-1 and the air blower fan 600, viewed from the upper direction. FIG. 13 is an exploded perspective view of the second support 500-1 and the air blower fan of FIG. 11, viewed from the lower direction.

The embodiment illustrated in FIGS. 11 to 13 is substantially the same as the electric range described with respect to FIGS. 6 and 7, except that the supporter does not have the operation support portion 570.

The air blower fan 600 may be disposed on an upper surface of the second support 500-1. The air blower fan 600 may include a discharge port (610 in FIG. 12), an inlet (620 in FIG. 13), and securing portions (632, 633 in FIG. 12).

The second support 500-1 may include the bottom plate 510 and the side plate 520. The function and structure of the first bottom plate 510 and side plate 520 may be the same as those described with respect to FIGS. 6 and 7.

Referring to FIG. 12 , the second support 500-1 may further include the boss portion 530. The boss portion 530 may be the same as that described with respect to FIGS. 6 and 7.

In addition, the second support 500-1 may further include the discharge portion 560 having the discharge hole 561. The discharge portion 560 may adjoin a lower front end of the air guide (700 in FIGS. 3 to 5). At least a portion of air discharged through the discharge portion (610 in FIG. 12) of the air blower fan 600 may be guided to the heat sink (900 in FIGS. 3 and 4) by the air guide to cool the heat sink (900 in FIGS. 3 and 4), and then may be discharged to the outside of the electric range 1 through the discharge hole 561 of the discharge portion 560.

Referring to FIGS. 12 and 13 , the air blower fan 600 may be mounted in the first region 511 of the bottom plate 510 of the second support 500-1. The configuration related to mounting the air blower fan 600 is the same as that described with respect to FIGS. 6 and 7.

When the second support 500-1 is coupled to the case 100, a distance between an upper surface of the first casing 110 of the case 100 and a lower surface of the first region 511 may be greater than a distance between the upper surface of the first casing 110 and a lower surface of the second region 512. That is, the second support 500-1 may serve to separate the inlet 620 of the air blower fan 600 from the upper surface of the first casing 110 by a predetermined distance. In this way, it is possible to effectively increase an intake area of the air blower fan 600.

Referring to FIG. 13, the second support 500-1 may include a rib 540 that protrudes downward from the lower surface of the first region 511 and surrounds the intake hole 5111. The rib 540 may prevent air in a region other than a space under the first region 511 from being drawn into the inlet 620 of the air blower fan 600. The temperature of air in a region other than the space under the first region 511 may be increased due to other components of the electric range. Conversely, the space under the first region 511, into which external air is introduced, has a relatively low temperature. According to an embodiment, due to the presence of the rib 540, relatively cool air may be used for cooling, thereby ensuring improved cooling efficiency.

The rib 540 may include a first rib 541 disposed at a right lower end of the first region 511, a second rib 542 disposed at a front lower end of the first region 511, a third rib 543 disposed at a left or second lateral lower end of the first region 511, and a fourth rib 544 disposed at a rear lower end of the first region 511.

Although the rib 540 is illustrated as having a generally rectangular shape in FIG. 13, embodiments are not limited thereto. For example, the rib 540 may have a circular shape, or may have a polygonal shape of 5 or more.

The bottom plate 510, the side plate 520, the boss portion 530, the rib 540, and the discharge portion 560, forming the second support 500-1, may be integrally formed. The second support 500-1 may be manufactured by injection molding.

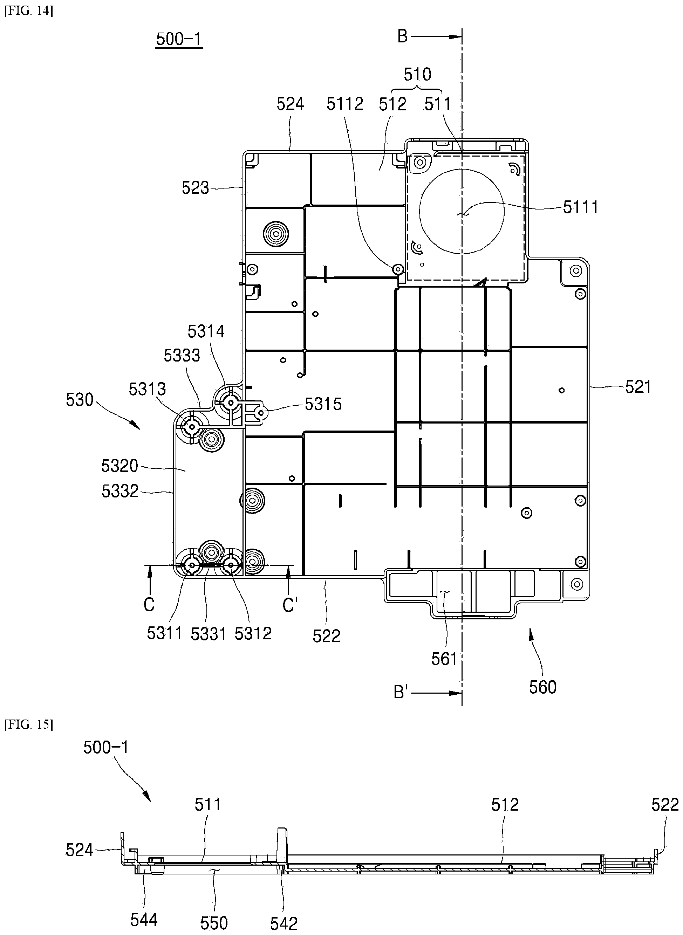

FIG. 14 is a plan view of the second support 500 of the electric range 1 according to an embodiment of the present disclosure. FIG. 15 is a cross-sectional view of the second support 500 of the electric range 1 of FIG. 14 , taken along line B-B'.

The overall configuration of the first bottom plate 510, first side plate 520, boss portion 530, and discharge portion 560 is the same as described above.

In addition, as described above, the second supporter 500 may include the first region 511 on which the air blower fan 600 is mounted and the second region 512 on which the printed circuit board is mounted.

In this case, the first region 511 may be formed so that the inlet (620 in FIG. 7) located at the bottom of the air blower fan 600 is spaced apart from the upper surface of the first casing 110 of the case 100.

Referring to FIG. 15 , the first region 511 may be located higher than the second region 512. That is, the lower surface of the first region 511 may be located higher than the lower surface of the second region 512. Alternatively, an upper surface of the first region 511 may be located higher than an upper surface of the second region 512. Accordingly, an intake space 550 may be formed under the first region 511. In addition, due to ribs 542, 544 that extend downward from the first region 511, the intake space 550 may be isolated from other spaces in the electric range 1.

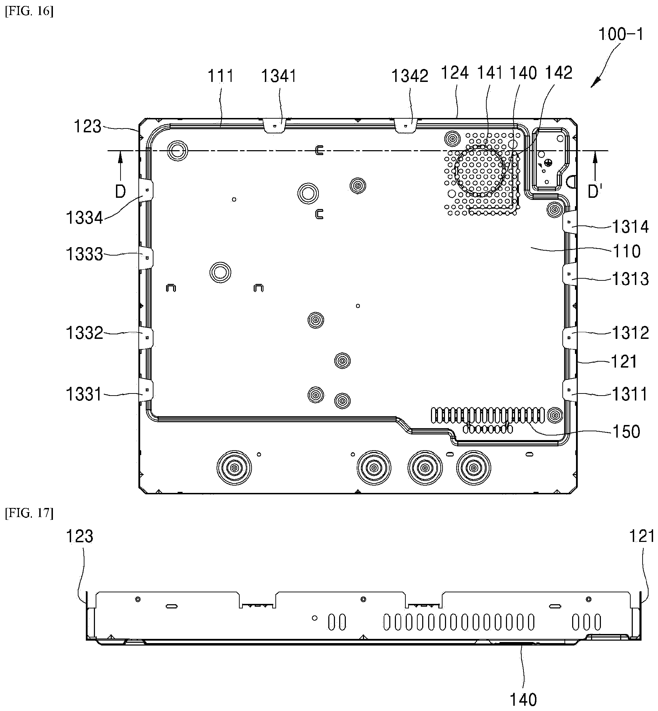

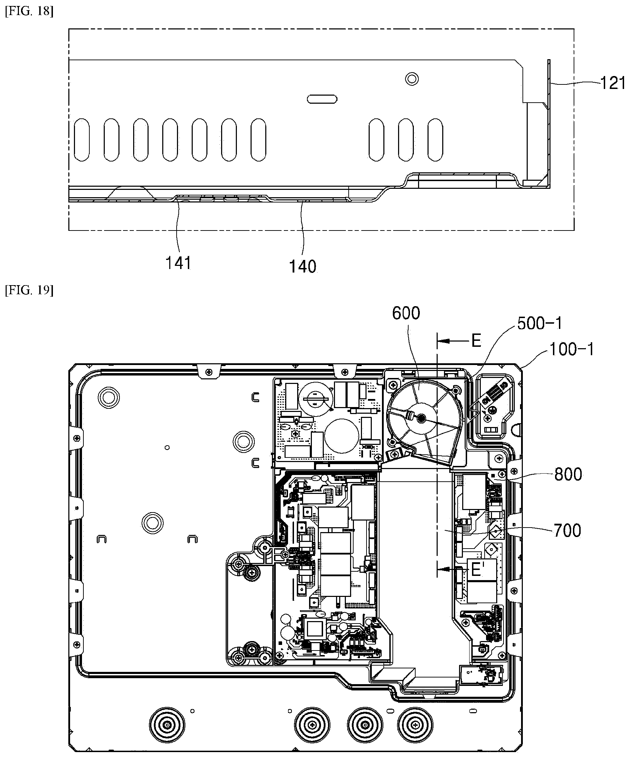

FIG. 16 is a plan view of the case 100 of the electric range 1 according to an embodiment of the present disclosure. FIG. 17 is a cross-sectional view of the case 100 of the electric range 1 of FIG. 16 according to an embodiment of the present disclosure, taken along line D-D'. FIG. 18 is an enlarged view of the intake portion 140 of the cross-sectional view of the electric range 1 of FIG. 17 according to an embodiment of the present disclosure.

The structures and functions of the second casings 121, 122, 123, 124 and third casings 1311, 1312, 1313, 1314, 1331, 1332, 1333, 1334, 1341, 1342 are the same as described above with reference to FIG. 3 and the like.

The first casing 110 of the case 100 according to an embodiment of the present disclosure may include the intake portion 140 and the discharge portion 150.

The intake portion 140 provides a passage through which air is drawn into the inlet of the air blower fan 600 when the air blower fan 600 is in operation. The intake portion 140 may be formed of a porous structure having multiple holes.

When the second support 500 is mounted on the case 100, the intake portion 140 may be formed at a location corresponding to the location of the first region 511. In addition, the intake portion 140 may have a larger area than that of the inlet 620 of the air blower fan 600. According to an embodiment, the intake portion 140 may have a same area as the first region 511. In addition, the rib 540 of the second support 500 may be disposed on the lower surface of the first region 511 to surround the intake portion 140.

The intake portion 140 may further include a first bent portion 141 and/or a second bent portion 142. The first bent portion 141 may be formed in a circular shape, but is not limited thereto. The second bent portion 142 may be formed near at least one edge of the discharge portion 140. For example, as illustrated in FIG. 16, it may be formed in a shape that connects the vicinity of the front edge of the intake portion 140 and the vicinity of the right edge of the intake portion 140, but is not limited thereto.

The first bent portion 141 and the second bent portion 142 may be formed by a forming process. The first bent portion 141 and the second bent portion 142 may be formed by vertically bending a portion of the intake portion 140.

The inside of the bent portions 141, 142 and the outside of the bent portions 141, 142 may form different planes. For example, the inside of the bent portions 141, 142 may be located higher than the outside of the bent portions 141, 142. The bent portion 141 is formed in the intake portion 140, thereby improving the rigidity of the intake portion 140.

The discharge portion 150 provides a passage through which air having passed through the air guide (700 in FIG. 3 to FIG. 5) is discharged to the outside when the air blower fan 600 is in operation. When the second support 500 is mounted on the case 100, the discharge portion 150 may be disposed on a location corresponding to the location of the discharge portion 560 of the second support 500.

According to an embodiment of the present disclosure, the first casing 110 of the case 100 includes the intake portion 140 formed at a location corresponding to the location of the air blower fan 600, and the intake portion 140 has a porous structure having multiple holes and a larger area than that of the inlet of the air blower fan 600. Thus, the intake portion 140 allows a sufficient amount of air to be introduced into the air blower fan 600 therethrough while filtering out foreign substances in the air, thereby improving cooling efficiency and preventing failure of the air blower fan due to foreign substances.

In addition, the intake portion 140 has at least one vertically bent portion 141, 142. Thus, the intake portion 140 may have a proper level of rigidity despite having a porous structure.

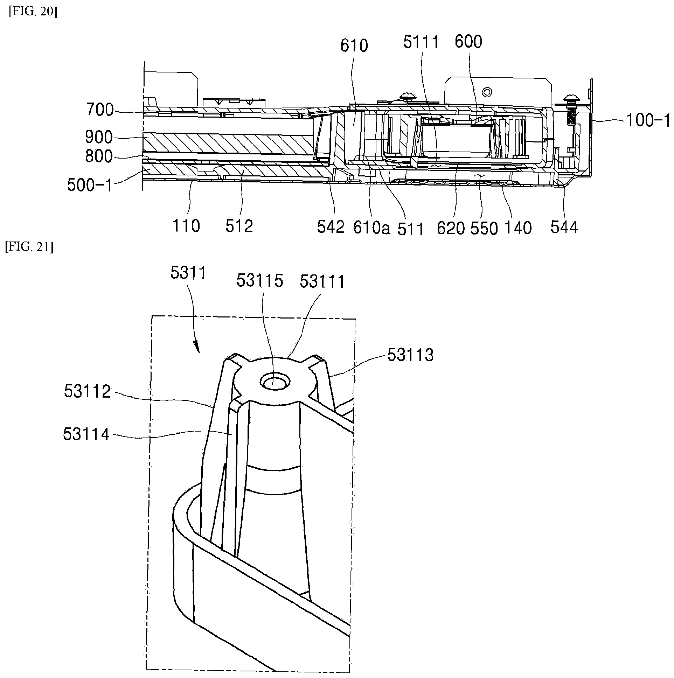

FIG. 19 is a plan view of an electric range according to an embodiment of the present disclosure, with the upper plate, the heating modules, and the upper bracket removed therefrom. FIG. 20 is a cross-sectional view of the electric range of FIG. 19 according to an embodiment of the present disclosure, taken along line E-E' of FIG. 13, illustrating a region in which the air blower fan 600 is mounted.

As described above, the electric range 1 according to an embodiment of the present disclosure includes the second support 500 on which the printed circuit board 800 and the air blower fan 600 are mounted. That is, the second support 500 includes the first region 511 in which the air blower fan 600 is mounted and the second region 512 in which the printed circuit board 800 with the heat sink 900 and other electronic components mounted thereon is mounted.

The second support 500 allows the air blower fan 600 to be separated upwards from the first casing 110 of the case 100 by a predetermined distance. Here, a distance between the lower surface of the first region 511 of the second support 500 and the upper surface of the first casing 110 may be greater than a distance between the lower surface of the second region 512 of the second support 500 and the upper surface of the first casing 110. Alternatively, the first region 511 of the second support 500 may be formed to be higher than the second region 512 of the second support 500. By the configuration, the predetermined space 550 may be formed between the second region 511 of the second support 500 and the first casing 110.

The first region 511 may have the intake hole 5111. When the air blower fan 600 is mounted on the second support 500, the intake hole 5111 may be formed at a location corresponding to the location of the inlet 620 of the air blower fan 600. The intake hole 5111 may have a slightly larger area than that of the inlet 620, or may have the same area as that of the inlet 620.

In addition, the first casing 110 of the case 100 may include the intake portion 140 disposed at a location corresponding to the location of the intake hole 5111. The intake portion 140 may have a larger area than that of the intake hole 5111. In addition, the intake portion 140 may have a porous structure having multiple holes.

That is, according to an embodiment of the present disclosure, the intake portion 140 having a larger area than the inlet of the air blower fan 600 may be formed on the case 100 by separating the air blower fan 600 from the case 100 using the second support 500. Accordingly, the airblowerfan 600 may draw in and discharge more air due to effective increase in intake area thereof. As a result, cooling efficiency may be improved.

In addition, according to an embodiment of the present disclosure, the second support 500 includes the rib 542, 544 that extend downward from the first region 511. The rib 542, 544 serves to isolate the space 550 from other spaces of the electric range 1. As a result, the air blower fan 600 may draw in cold air outside the electric range 1, rather than hot air inside of the electric range 1, thereby improving cooling efficiency.

Further, according to an embodiment of the present disclosure, the second support 500 may separate the air blower fan 500 from the case 100 such that the lower surface 610a of the discharge port 610 of the air blower fan 600 may be the same as or higher than the lower surface of the printed circuit board 800, or may be higher than the lower surface of the printed circuit board 800. More preferably, the second support 500 allows the lower surface 610a of the discharge port 610 of the air blower fan 600 to be on a same plane as the upper surface of the printed circuit board 800. Hereinafter, the expression "on the same plane" refers to "on substantially the same plane" considering errors in design or manufacturing processes, as well as "on exactly the same plane". To do this, the upper surface of the first region 511 may be located higher than the upper surface of the second region 512. In this way, the air discharged from the air blower fan 600 may be discharged only to the upper surface of the printed circuit board 800 without being discharged to the lower surface of the printed circuit board 800. As a result, a larger amount of air may be supplied to the heat sink (900 in FIG. 3) and other electronic components, which are attached to the upper surface of the printed circuit board 800, thereby improving cooling efficiency.

Moreover, according to an embodiment of the present disclosure, the airblowerfan 600 and the second support 500 may be mounted on the case 100 by a bolt fastened to the first casing 110 of the case 100 through the securing portion 632 and/or 633 of the air blower fan 600 and the fan securing hole 5112 and/or 5113 of the second support 500. In this way, even when the second support 500 and the like undergo deformation, isolation state of the intake space 550 may be maintained, thereby preventing reduction in cooling efficiency due to deformation of the second support 500 and the like.

FIG. 21 is an enlarged view of the first boss 5311 of the support 500 (or the second support 500-1) of the electric range 1 according to an embodiment of the present disclosure. The first boss 5311 may include a body 53111 and the ribs 53112, 53113, 53114. The other bosses 5312, 5313, 5314 may also have a similar structure to the first boss 5311 of FIG. 21.

The body 53111 may have a cylindrical shape whose cross-sectional area narrows as it goes upward. In addition, the body 53111 may be formed on an upper surface thereof with a coupling hole 53115 to which a coupling bolt may be fastened.

The ribs 53112, 53113, 53114 may be formed radially along an outer peripheral surface of the body 53111.

Due to this structure, the first boss 5311 may have improved rigidity.

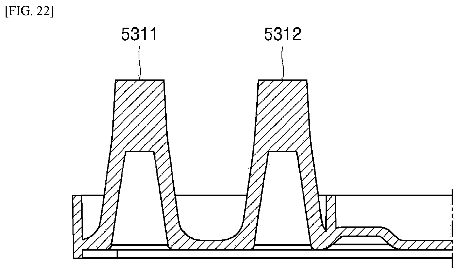

FIG. 22 is a cross-sectional view of the second support 500-1 of the electric range 1 of FIG. 14 of an embodiment of the present disclosure, taken along line C-C'.

The boss portion 530 may include a second bottom plate 5320 forming the bottom surface of the boss portion 530, second side plates 5331, 5332, 5333 bent upward from an edge of the second bottom plate 5320, and bosses 5311, 5312, 5313, 5314 disposed on an upper surface of the second bottom plate 5320.

The boss portion 530 may be disposed to one side (for example, left) of the mounting portion 510, 520. More specifically, one side (for example, the right side) of the second bottom plate 5320 of the boss portion 530 may adjoin one side (for example, the left side) of the first bottom plate 510 of the mounting portion. The first-3 side plate 523 may be formed to be bent upward from a boundary between the first bottom plate 510 and the second bottom plate 5320.

The boss portion 530 may further include a fifth boss 5315 that is secured to a securing portion that extends from the first-3 side plate 523 in a direction (the right direction in an embodiment) opposite to a direction in which the boss portion 530 is disposed, and serves to support the first upper bracket 210.

Referring to FIG. 22 , the body (53111 in FIG. 6 ) of the bosses 5311, 5312 of the boss portion 530 may be hollow inside. In this way, the boss portion may have improved moldability.

The present disclosure has been described with reference to the embodiments illustrated in the drawings. However, the disclosure is not limited to the embodiments and the drawings set forth herein. Further, various modifications may be made by one having ordinary skill in the art within the scope of the technical spirit of the disclosure. Further, though not explicitly described during description of the embodiments of the disclosure, effects and predictable effects according to the configuration of the disclosure should be included in the scope of the disclosure.

## Claims

1. An electric range comprising:
a case which forms an appearance;
a heating unit which heats an object to be heated;
an upper bracket which is disposed on a lower portion of the heating unit and supports the heating unit;
an operation unit through which operation command for controlling the heating unit is input;
a printed circuit board on which at least one electronic component for driving the heating unit is mounted; and
a supporter which is disposed on a lower portion of the upper bracket,
wherein the supporter includes a first support which supports the printed circuit board and a second support which supports the operation unit.

2. The electric range of claim 1, further comprising an upper plate which is disposed on an upper portion of the case and on which the object to be heated is disposed on an upper surface thereof,
wherein the heating unit is disposed on a lower portion of the upper plate.

3. The electric range of claim 1, wherein a lower surface of the second support is spaced apart from an upper surface of the case.

4. The electric range of claim 3, further comprising:
an air blower fan which is mounted on the first support, intakes air into an air blower intake portion and discharges the air through an air blower discharge portion; and
an air guide which is mounted on the first support and includes a guide intake portion connected to the air blower discharge portion and a guide discharge portion,
wherein the supporter further includes an intake hole formed at a location corresponding to a location of the air blower intake portion and a discharge hole formed between the first support and the second support and connected to the guide discharge portion.

5. The electric range of claim 4, wherein the case further includes a case intake portion formed at a location corresponding to a location of the intake hole and a case discharge portion formed at a location corresponding to a location of the second support.

6. The electric range of claim 5, wherein the case includes:
a first casing which forms a bottom surface of the case;
a second casing which is formed to be bent from the first casing, and forms a front surface, side surface and rear surface of the case; and
a third casing which is formed to be bent from the second casing and supports the upper bracket,
wherein the case intake portion and the case discharge portion are formed in the first casing.

7. The electric range of claim 5, wherein each of the case intake portion and the case discharge portion has a porous structure having multiple holes.

8. The electric range of claim 1, wherein the second support includes:
a bottom plate which is connected to the first support in front of the first support and is spaced apart from an upper surface of the case; and
at least one boss which is disposed on the bottom plate and is coupled to the operation unit.

9. An electric range comprising:
a case which forms an appearance;
a heating unit which heats an object to be heated;
an operation unit through which operation command for controlling the heating unit is input;
a printed circuit board on which at least one electronic component for driving the heating unit is mounted; and
an air blower fan which intakes air into an air blower intake portion and discharges the air through an air blower discharge portion,
wherein the case includes a case intake portion formed at a location corresponding to a location of the air blower intake portion and a case discharge portion formed below the operation unit, and air discharged to the air blower discharge portion is discharged through the case discharge portion.

10. The electric range of claim 9, further comprising an upper plate which is disposed on an upper portion of the case and on which the object to be heated is disposed on an upper surface thereof,
wherein the heating unit is disposed on a lower portion of the upper plate.

11. The electric range of claim 9, further comprising an upper plate which is disposed on a lower portion of the heating unit and supports the heating unit,
wherein the case includes:
a first casing which forms a bottom surface of the case;
a second casing which is formed to be bent from the first casing, and forms a front surface, side surface and rear surface of the case; and
a third casing which is formed to be bent from the second casing and supports the upper bracket,
wherein the case intake portion and the case discharge portion are formed in the first casing.

12. The electric range of claim 9, wherein each of the case intake portion and the case discharge portion has a porous structure having multiple holes.

13. The electric range of claim 9, further comprising a supporter disposed a lower portion of the heating unit,
wherein the air blower fan is mounted on the supporter.

14. The electric range of claim 13, further comprising an air guide which is mounted on the support and includes a guide intake portion connected to the air blower discharge portion and a guide discharge portion,
wherein the supporter further includes an intake hole formed at a location corresponding to a location of the air blower intake portion and a discharge hole connected to the guide discharge portion.

15. The electric range of claim 13, wherein the supporter includes a first support on which the printed circuit board is mounted and a second support which is connected to a front of the first support and is disposed between the operation unit and the case discharge portion.

16. The electric range of claim 15, wherein the second support is spaced apart from an upper surface of the case.
